# EUROPÄISCHE PATENTSCHRIFT

(11) **EP 1 240 046 B1**
(45) Veröffentlichungstag und Bekanntmachung des Hinweises auf die Patenterteilung: **04.08.2004**
(21) Anmeldenummer: 00993599.0
(22) Anmeldetag: 11.12.2000
(51) Int. Cl.: B60M 1/24

(54) **FAHRDRAHTKLEMME**
CONTACT WIRE CLAMP
PINCE DE FIL DE CONTACT

(30) Priorität: 23.12.1999 DE 19962692
(43) Veröffentlichungstag der Anmeldung: 18.09.2002
(73) Patentinhaber: SIEMENS AKTIENGESELLSCHAFT, 80333 München (DE)
(72) Erfinder: GANSHORN, Rolf-Dieter, 68169 Mannheim (DE)
(86) Internationale Anmeldenummer: PCT/DE2000/004399
(87) Internationale Veröffentlichungsnummer: WO 2001/047741

(56) Entgegenhaltungen:
- EP-A- 0 338 299
- DE-A- 2 331 808

## Beschreibung

Die Erfindung betrifft eine Fahrdrahtklemme mit zwei identisch geformten Klemmenteilen, die jeweils einen ersten Endbereich, einen zweiten Endbereich, einen zwischen beiden Endbereichen liegenden Mittenbereich und eine Klemmleiste aufweisen. Dabei weisen die ersten Endbereiche jeweils eine durchgehende, rechtwinklig und waagrecht zur Klemmleiste verlaufende Gewindebohrung und die zweiten Endbereiche jeweils eine durchgehende rechtwinklig und waagrecht zur Klemmleiste verlaufende Bohrung auf. Zum Zusammenfügen der beiden Klemmenteile ist jeweils eine Schraube durch die durchgehende Gewindebohrung des einen und die dazu korrespondierende durchgehende Bohrung des anderen Klemmenteils geführt. Die Schrauben sind durch jeweils eine Mutter axial gesichert. Bei montierter Fahrdrahtklemme klemmen die beiden Klemmenteile durch die beiden Schrauben und ihre Muttern einen Rillenfahrdraht derart, dass die Klemmleisten in Eingriff mit den Rillen des Rillenfahrdrahtes stehen.

Fahrdrahtklemmen dienen bei Oberleitungen dazu, den Fahrdraht zu halten. Die Fahrdrahtklemme ist hierzu über einen Klemmenhalter an einem Seitenhalter befestigt. Der z. B. aus Stahl, Aluminium oder GFK gefertigte Seitenhalter ist Bestandteil des Oberleitungstragwerkes und dient zur seitlichen Fixierung des Fahrdrahtes zum Gleis. Der Seitenhalter ist einerseits vertikal beweglich, um damit einem Anheben des Fahrdrahtes durch den Stromabnehmer keinen zu starken Widerstand entgegenzusetzen. Andererseits muss der Seitenhalter auch horizontal beweglich sein, um dadurch Wärmeausdehnungen innerhalb der Oberleitung zu ermöglichen. Aufgrund der horizontalen Beweglichkeit des Seitenhalters muss die Fahrdrahtklemme um ihre Hochachse drehbar gehaltert sein.

In einem bekannten Fall umfassen die Fahrdrahtklemmen einen Klemmenkörper und einen Klemmdeckel. Der Klemmenkörper ist durch einen Bügelsplint durch den Drehbolzen mit Ringnut am Klemmenhalter drehbeweglich befestigt. Die beiden Enden des Bügelsplintes werden umgeschlagen und so gegen Herausfallen gesichert. Ein Auswechseln einer Fahrdrahtklemme erfordert das Aufbiegen und Herausnehmen des Bügelsplintes.

In einem weiteren bekannten Fall umfassen die Fahrdrahtklemmen ebenfalls einen Klemmenkörper und einen Klemmdeckel. Der Klemmenkörper ist über Gewindebolzen am Klemmenhalter drehbeweglich gehalten. Der Klemmenkörper weist hierzu eine senkrecht zum Fahrdraht verlaufende Gewindebohrung auf. Bei einer Demontage der Fahrdrahtklemme muss der Fahrdraht vorher entfernt werden, weil der Klemmenkörper um sich selbst gedreht werden muss. Diese Fahrdrahtklemme ist zwar verschleißarm, jedoch montage- und wartungsunfreundlich.

Ferner sind Fahrdrahtklemmen mit einem Klemmenkörper und einem Klemmdeckel bekannt. Der Klemmdeckel weist Haltenasen auf, die in die Ringnut des Drehbolzens am Klemmenhalter eingreifen. Diese leicht montierbare Fahrdrahtklemme ist axial fixiert und drehbeweglich. Die Verbindung der Klemmdeckel mit Haltenasen zu der Ringnut des Drehbolzens ist einem Abrieb unterworfen, der die Einsatzdauer dieser Fahrdrahtklemme begrenzt.

Aus der DE 23 31 808 A1 ist eine Seitenhalterklemme bekannt, die auf eine Halterung aufgeklemmt wird. Zwei Hälften der Klemme umschließen dazu mit Ausnehmungen diese Halterung. Danach werden die Hälften zusammengeschraubt. Die Halterung wird dadurch eingeklemmt und ist nicht mehr zu drehen.

Selbst kleine Drehbewegungen, die auf Wärmeausdehnungen innerhalb der Oberleitung zurückgehen, sind nicht möglich, oder führen zu einem zu hohen Verschleiß durch Abrieb.

Aufgabe der vorliegenden Erfindung ist es, eine Fahrdrahtklemme anzugeben, die verschleißarm und trotzdem drehbeweglich ist und darüber hinaus schnell und einfach, insbesondere ohne lose Teile, montierbar und demontierbar ist. Die Fahrdrahtklemme soll auch einfach herstellbar sein.

Die Aufgabe wird erfindungsgemäß dadurch gelöst, dass der Mittenbereich jedes der zwei Klemmenteile eine Gewindehalbschale aufweist, die sich senkrecht zu den durchgehenden Gewindebohrungen und den durchgehenden Bohrungen sowie senkrecht zur Klemmleiste erstreckt, und dass bei montierter Fahrdrahtklemme die Gewindehalbschalen eine Gewindeaufnahme bilden.

Damit wird der Vorteil erzielt, dass einerseits die Fahrdrahtklemme vom Fahrdraht nicht gelöst werden muss, um sie mit der Halterung zu verbinden, da sie nicht auf ihre Halterung aufgeschraubt wird, und dass andererseits aber trotzdem die Fahrdrahtklemme mit der Halterung über ein leicht drehbares Gewinde in Verbindung steht. Die Fahrdrahtklemme ist also einerseits ohne dass sie selbst gedreht werden muss zu montieren und andererseits ist trotzdem eine Schraubverbindung mit der Halterung gegeben, die Drehbewegungen ohne große Reibung zulässt. Diese Drehbewegungen, in der Regel um kleine Winkel, werden verursacht z.B durch die Wärmedehnung der Oberleitung.

Die Fahrdrahtklemme nach der Erfindung ist insbesondere verschleißarm drehbeweglich, einfach herstellbar und einfach montierbar und demontierbar, da alle ihre Bestandteile vor der eigentlichen Montage einander zugeordnet sein können. Ebenso kann vorteilhafterweise die Verbindung zwischen Fahrdraht und Fahrdrahtklemme bereits vor der Montage an der Halterung gegeben sein.

Vorteilhafte Ausgestaltungen der erfindungsgemäßen Fahrdrahtklemme sind Gegenstand der Unteransprüche.

Die Fahrdrahtklemme nach Anspruch 1 umfaßt zwei identisch geformte Klemmenteile, die jeweils einen ersten Endbereich, einen zweiten Endbereich, einen zwischen beiden Endbereichen liegenden Mittenbereich und eine Klemmleiste aufweisen, wobei der erste Endbereich jeweils eine durchgehende, rechtwinklig und waagrecht zur Klemmleiste verlaufende Gewindebohrung und der zweite Endbereich jeweils eine durchgehende, rechtwinklig und waagrecht zur Klemmleiste verlaufende Bohrung und der Mittenbereich jeweils eine Gewindehalbschale aufweist, die sich senkrecht zu den durchgehenden Gewindebohrungen und den durchgehenden Bohrungen sowie senkrecht zur Klemmleiste erstreckt. Zum Zusammenfugen der beiden Klemmenueile ist jeweils eine Schraube durch eine durchgehende Gewindebohrung und eine dazu korrespondierende durchgehende Bohrung geführt und durch eine Mutter axial gesichert. Bei montierter Fahrdrahtklemme klemmen die beiden Klemmenteile durch die beiden Schrauben und ihre Muttern einen Rillenfahrdraht derart, dass die Klemmleisten in Eingriff mit den Rillen des Rillenfahrdrahtes stehen und die Gewindehalbschalen eine Gewindeaufnahme bilden.

Die beiden identisch geformten Klemmenteile ergeben nach dem Zusammenfügen eine spiegelbildlich aufgebaute Fahrdrahtklemme. Jeweils eine durchgehende Gewindebohrung in dem einen Klemmenteil und eine durchgehende Bohrung in dem anderen Klemmenteil liegen gegenüber. In die durchgehende Gewindebohrung wird jeweils eine Schraube eingeschraubt und nach Durchführung durch die durchgehende Bohrung im anderen Klemmenteil mit einer Mutter axial gesichert. Aufgrund des identischen Aufbaus der beiden Klemmenteile verlaufen die beiden Schrauben antiparallel zueinander.

Das Einschneiden eines Gewindes in die beiden Gewindehalbschalen erfolgt in vorteilhafter Weise dadurch, dass die Fahrdrahtklemme zunächst auf eine Vorrichtung mit einem entsprechenden Fahrdrahtprofil montiert wird. Dies geschieht durch Festziehen der Muttern. Dadurch bilden die beiden noch nicht mit einem Gewinde versehenen Gewindehalbschalen eine Gewindeaufnahme, in die das gewünschte Gewinde (z. B. M16) problemlos geschnitten werden kann.

Nach der Bearbeitung der Gewindehalbschalen umfasst die Fahrdrahtklemme zwei zueinander korrespondierende Klemmenteile, die nicht austauschbar sind.

Nach dem Bearbeiten werden die Schrauben und die Muttern gelockert, die Fahrdrahtklemme von der Vorrichtung genommen, gereinigt und die Muttern leicht angezogen. In diesem Zustand wird die vormontierte Fahrdrahtklemme ausgeliefert.

Die endgültige Montage z. B. an einem Klemmenhalter, der einen Gewindebolzen aufweist und der kraftschlussig an einem Seitenhalter befestigt ist, und die gleichzeitige Klemmung eines Rillenfahrdrahtes erfolgt in drei Stufen:

Die beiden Klemmenteile der erfindungsgemaßen Fahrdrahtklemme sind zunächst voneinander beabstandet und werden auf den im wesentlichen senkrecht nach unten zeigenden Gewindebolzen des Klemmenhalters aufgeschoben.

Dann werden die Muttern der beiden Schrauben so weit eingedreht, dass die erfindungsgemäße Fahrdrahtklemme selbsttätig am Gewindebolzen des Klemmenhalters gehalten wird. Die Klemmleisten der beiden Klemmenteile sind jedoch noch so weit voneinander beabstandet, dass der Rillenfahrdraht von unten eingeführt werden kann.

Nach dem Einführen des Fahrdrahtes werden die beiden Klemmenteile durch Festziehen der beiden Schrauben fest miteinander verspannt. Anschließend werden die beiden Muttern festgezogen. Der Rillenfahrdraht wird dadurch geklemmt und die erfindungsgemäße Fahrdrahtklemme ist auf dem Gewindebolzen des Klemmenhalters drehbar und axial fixiert befestigt.

Die erfindungsgemäße Fahrdrahtklemme ermöglicht damit eine einfache Montage ohne lose Teile. Für die Gewindebefestigung am Gewindebolzen des Klemmenhalters, die die Drehbewegung und die seitliche Fixierung des Fahrdrahtes zum Gleis sicherstellt, muss die Fahrdrahtklemme bei ihrer Montage also nicht um die eigene Achse aufgedreht werden. Es ist lediglich ein einfaches Aufschieben der vormontierten und geöffneten Fahrdrahtklemme erforderlich.

Die Fahrdrahtklemme nach Anspruch 1 ist darüber hinaus auch einfach herstellbar, da sie - bis auf die Gewindehalbschalen - aus zwei identischen Klemmenteilen besteht, die spiegelbildlich montiert die erfindungsgemaße Fahrdrahtklemme ergeben.

Bei einer Ausgestaltung gemäß Anspruch 2 wird von den beiden Kugelpfannen und ihren korrespondierenden Halbkugeln ein Ge-lenk gebildet, wodurch das Klemmen des Rillenfahrdrahtes besonders einfach ist und ein Verkanten der Gewindehälften am Gewindebolzen des Klemmenhalters vermieden wird.

Die Erfindung sowie weitere vorteilhafte Ausgestaltungen werden in folgenden anhand eines Ausführungsbeispieles naher erläutert. Es zeigen:
- FIG 1: eine Ansicht eines Klemmenteiles einer Fahrdrahtklemme;
- FIG 2: eine Draufsicht auf das Klemmenteil nach FIG 1;
- FIG 3: eine Seitenansicht des Klemmenceiles nach FIG 1;
- FIG 4: eine ruckseitige Ansicht des Klemmenteiles nach FIG 1;
- FIG 5: eine Ansicht einer montierten Fahrdrahtklemme ohne Klemmenhalter mit Gewindebolzen;
- FIG 6: eine Draufsicht auf die Fahrdrahtklemme gemäß FIG 5;
- FIG 7: eine stirnseitige Ansicht der montierten Fahrdrahtklemme nach FIG 5;
- FIG 8: eine vormontierte und geöffnete Fahrdrahtklemme, bereit zur Montage an einem Klemmenhalter mit Gewindebolzen.

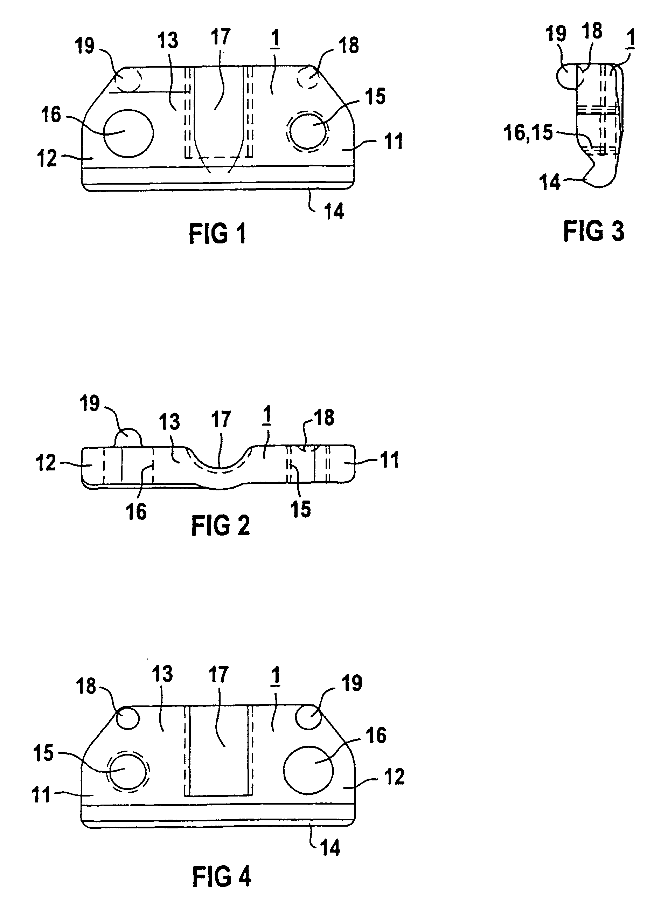

In den FIG 1 bis 4 ist mit 1 ein Klemmenteil bezeichnet, das einen ersten Endbereich 11, einen zweiten Endbereich 12 sowie einen zwischen beiden Endbereichen 11 und 12 liegenden Mittenbereich 13 aufweist. Das Klemmenteil 1 weist weiterhin eine Klemmleiste 14 auf, die sich über die gesamte Länge des Klemmenteiles 1 erstreckt.

Im ersten Endbereich 11 ist eine durchgehende Gewindebohrung 15 und im zweiten Endbereich 12 ist eine durchgehende Bohrung 16 angeordnet. Sowohl die durchgehende Gewindebohrung 15 als auch die durchgehende Bohrung 16 verlaufen rechtwinklig und waagrecht zur Klemmleiste 14.

Im Mittenbereich 13 ist das Klemmenteil 1 zu einer Gewindehalbschale 17 geformt. Die Gewindehalbschale 17 erstreckt sich senkrecht zur durchgehenden Gewindebohrung 15, senkrecht zur durchgehenden Bohrung 16 sowie senkrecht zur Klemmleiste 14.

Weiterhin weist das Klemmenteil 1 in seinem ersten Endbereich 11 eine symmetrisch zur Gewindehalbschale 17 angeordnete Kugelpfanne 18 und in seinem zweiten Endbereich 12 eine symmetrisch zur Gewindehalbschale 17 angeordnete Halbkugel 19 auf.

Die Kugelpfanne 18 ist hierbei oberhalb der durchgehenden Gewindebohrung 15 und die Halbkugel 19 oberhalb der durchgehenden Bohrung 16 angeordnet.

Um eine vollständige Fahrdrahtklemme zu erhalten, wird zu dem Klemmenteil 1 ein weiteres Klemmenteil 2 benötigt, das identisch geformt ist. Das Klemmenteil 2 weist also ebenfalls einen ersten Endbereich 21, einen zweiten Endbereich 22 sowie einen zwischen beiden Endbereichen 21 und 22 liegenden Mittenbereich 23 auf. Das Klemmenteil 2 weist weiterhin ebenfalls eine Klemmleiste 24 auf, die sich über die gesamte Länge des Klemmenteiles 2 erstreckt.

Wiederum ist im ersten Endbereich 21 eine durchgehende Gewindebohrung 25 und im zweiten Endbereich 22 eine durchgehende Bohrung 26 angeordnet. Sowohl die durchgehende Gewindebohrung 25 als auch die durchgehende Bohrung 26 verlaufen rechtwinklig und waagrecht zur Klemmleiste 24.

Im Mittenbereich 23 ist das Klemmenteil 2 zu einer Gewindehalbschale 27 geformt. Die Gewindehalbschale 27 erstreckt sich senkrecht zur durchgehenden Gewindebohrung 25, senkrecht zur durchgehenden Bohrung 26 sowie senkrecht zur Klemmleiste 24.

Weiterhin weist das Klemmenteil 2 in seinem ersten Endbereich 21 eine symmetrisch zur Gewindehalbschale 27 angeordnete Kugelpfanne 28 und in seinem zweiten Endbereich 22 eine symmetrisch zur Gewindehalbschale 27 angeordnete Halbkugel 29 auf.

Die Kugelpfanne 28 ist hierbei oberhalb der durchgehenden Gewindebohrung 25 und die Halbkugel 29 oberhalb der durchgehenden Bohrung 26 angeordnet.

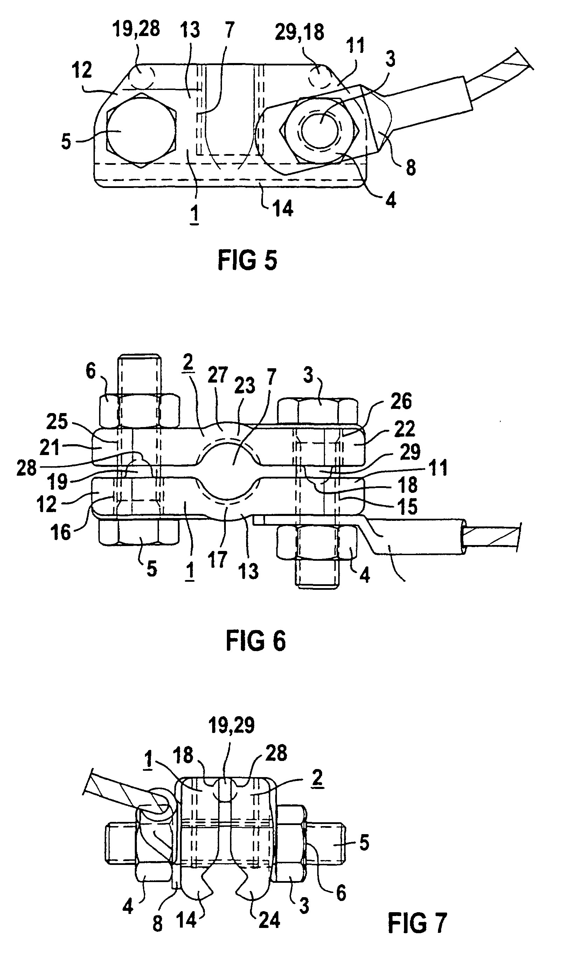

Die in den FIG 5 bis 8 dargestellte vollständige Fahrdrahtklemme erhält man dadurch, dass man beide Klemmenteile 1 und 2 spiegelbildlich gedreht zusammenfügt. Die durchgehende Gewindebohrung 15 korrespondiert dann mit der durchgehenden Bohrung 26 und die durchgehende Gewindebohrung 25 korrespondiert mit der durchgehenden Bohrung 16. Weiterhin korrespondiert die Kugelpfanne 18 mit der Halbkugel 29 und die Kugelpfanne 28 mit der Halbkugel 19. Außerdem bilden die Gewindehalbschalen 17 und 27 eine Gewindeaufnahme 7.

Zum Zusammenfugen der beiden Klemmenteile 1 und 2 ist eine Schraube 3 durch die durchgehende Gewindebohrung 15 und die dazu korrespondierende durchgehende Bohrung 26 geführt. Weiterhin ist eine Schraube 5 durch die durchgehende Gewindebohrung 25 und die dazu korrespondierende durchgehende Bohrung 16 geführt. Beide Schrauben 3 und 5 sind durch jeweils eine Mutter 4 bzw. 6 axial gesichert.

Bei montierter Fahrdrahtklemme klemmen die beiden Klemmenteile 1 und 2 durch die beiden Schrauben 3 und 5 und ihre Muttern 4 und 6 einen in den FIG 5 bis 8 nicht dargestellten Rillenfahrdraht derart, dass die Klemmleisten 14 und 24 in Eingriff mit den Rillen des Rillenfahrdrahtes stehen.

Bei der in den FIG 5 bis 7 dargestellten Ausfuhrungsform der erfindungsgemäßen Fahrdrahtklemme ist zwischen der Mutter 6 und dem Klemmenteil 1 ein Kabelschuh 8 eines elektrischen Kabels eingeklemmt.

Die endgültige Montage z. B. an einem Klemmenhalter, der einen Gewindebolzen aufweist und der kraftschlüssig an einem Seitenhalter befestigt ist, und die gleichzeitige Klemmung eines Rillenfahrdrahtes erfolgt in drei Stufen:

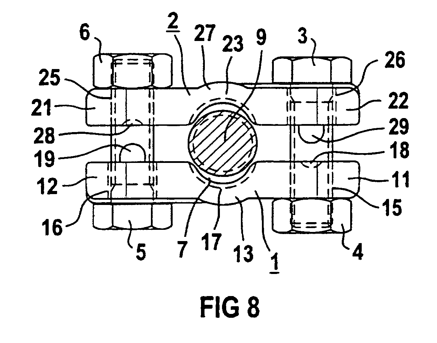

Die beiden Klemmenteile 1 und 2 der Fahrdrahtklemme sind zunächst voneinander beabstandet (siehe FIG 8) und werden auf den im wesentlichen senkrecht nach unten zeigenden Gewindebolzen 9 des Klemmenhalters aufgeschoben.

Dann werden die Muttern 4 und 6 der beiden Schrauben 3 und 5 so weit eingedreht, dass die erfindungsgemäße Fahrdrahtklemme selbsttätig an einem Gewindebolzen 9 eines Klemmenhalters gehalten wird. Die Klemmleisten 14 und 24 der beiden Klemmenteilel und 2 sind jedoch noch so weit voneinander beabstandet, dass der Rillenfahrdraht von unten eingeführt werden kann.

Nach dem Einfuhren des Fahrdrahtes werden die beiden Klemmenteile 1 und 2 durch Festziehen der jeweiligen Mutter 4 und 6 an den beiden Schrauben 3 und 5 fest miteinander verspannt. Der Rillenfahrdraht wird dadurch auf einfache Weise geklemmt.

Eine Demontage der Fahrdrahtklemme ist ebenso einfach möglich. Durch Lösen der Muttern 4 und 6 an den beiden Schrauben 3 und 5 kann zunachst der Rillenfahrdraht herausgenommen werden. Anschließend kann die Fahrdrahtklemme vom Gewindebolzen 9 des Klemmenhalters abgenommen werden.

## Patentansprüche

1. Fahrdrahtklemme mit zwei identisch geformten Klemmenteilen (1,2), die jeweils einen ersten Endbereich (11, 21), einen zweiten Endbereich (12, 22), einen zwischen beiden Endbereichen liegenden Mittenbereich (13, 23) und eine Klemmleiste (14, 24) aufweisen, wobei die ersten Endbereiche (11, 21) jeweils eine durchgehende, rechtwinklig und waagrecht zur Klemmleiste (14, 24) verlaufende Gewindebohrung (15, 25) und die zweiten Endbereiche (12, 22) jeweils eine durchgehende, rechtwinklig und waagrecht zur Klemmleiste (14, 24) verlaufende Bohrung (16, 26) aufweisen, wobei zum Zusammenfügen der beiden Klemmenteile (1, 2) jeweils eine Schraube (3, 5) durch die durchgehende Gewindebohrung (15, 25) des einen (1, 2) und die dazu korrespondierende durchgehende Bohrung (16, 26) des anderen Klemmenteils (2, 1) geführt und durch eine Mutter (4, 6) axial gesichert ist, und wobei bei montierter Fahrdrahtklemme die beiden Klemmenteile (1, 2) durch die beiden Schrauben (3, 5) und ihre Muttern (4, 6) einen Rillenfahrdraht derart klemmen, dass die Klemmleisten (14, 24) in Eingriff mit den Rillen des Rillenfahrdrahtes stehen,
**dadurch gekennzeichnet, dass** der Mittenbereich (13, 23) jedes der zwei Klemmenteile (1, 2) eine Gewindehalbschale (17, 27) aufweist, die sich senkrecht zu den durchgehenden Gewindebohrungen (15, 25) und den durchgehenden Bohrungen (16, 26) sowie senkrecht zur Klemmleiste (14, 24) erstreckt, und dass bei montierter Fahrdrahtklemme die Gewindehalbschalen (17, 27) eine Gewindeaufnahme (7) bilden.

2. Fahrdrahtklemme nach Anspruch 1, die folgendes Merkmal umfasst:
- beide Klemmenteile (1, 2) weisen in ihrem ersten Endbereich (11, 21) eine symmetrisch zur Gewindehalbschale (17, 27) angeordnete Kugelpfanne (18,28) und in ihrem zweiten Endbereich (12, 22) eine symmetrisch zur Gewindehalbschale (17, 27) angeordnete Halbkugel (19, 29) auf, die bei zusammengefügten Klemmenteilen (1, 2) miteinander korrespondieren.

3. Fahrdrahtklemme nach Anspruch 3, die folgendes Merkmal umfasst:
- die Kugelpfanne (18, 28) ist jeweils oberhalb der durchgehenden Gewindebohrung (15,25) und die Halbkugel (19, 29) ist jeweils oberhalb der durchgehenden Bohrung (16, 26) angeordnet.

4. Fahrdrahtklemme nach Anspruch 1, die folgendes Merkmal umfasst:
- Zwischen einer der beiden Muttern (4, 6) und dem Klemmenteil (1, 2) ist ein Kabelschuh (8) eines elektrischen Kabels einklemmbar.

## Claims

1. Contact wire clamp having two identically shaped clamp parts (1, 2) which in each case have a first end region (11, 21), a second end region (12, 22), a central region (13, 23) situated between the two end regions, and a clamping strip (14, 24), the first end regions (11, 21) in each case having a continuous threaded hole (15, 25) running at right angles and horizontally to the clamping strip (14, 24), and the second end regions (12, 22) in each case having a continuous hole (16, 26) running at right angles and horizontally to the clamping strip (14, 24), the two clamp parts (1, 2) being joined together by a respective screw (3, 5) being guided through the continuous threaded hole (15, 25) of the one clamp part (1, 2) and through the corresponding, continuous hole (16, 26) of the other clamp part (2, 1) and being secured axially by a nut (4, 6), and, with the contact wire clamp assembled, the two clamp parts (1, 2) use the two screws (3, 5) and their nuts (4, 6) to clamp a grooved contact wire in such a manner that the clamping strips (14, 24) are in engagement with the grooves of the grooved contact wire, **characterized in that** the central region (13, 23) of each of the two clamp parts (1, 2) has a threaded half shell (17, 27) which extends perpendicularly to the continuous threaded holes (15, 25) and the continuous holes (16, 26) and perpendicularly to the clamping strip (14, 24), and **in that**, with the contact wire clamp assembled, the threaded half shells (17, 27) form a threaded holder (7).

2. Contact wire clamp according to Claim 1, which comprises the following feature:
- the two clamp parts (1, 2) have, in their first end region (11, 21), a ball socket (18, 28) which is arranged symmetrically to the threaded half shell (17, 27) and, in their second end region (12, 22), a hemisphere (19, 29) arranged symmetrically to the threaded half shell (17, 27), the hemispheres corresponding with each other when the clamp parts (1, 2) are joined together.

3. Contact wire clamp according to Claim 1, which comprises the following feature:
- the ball socket (18, 28) is arranged in each case above the continuous threaded hole (15, 25) and the hemisphere (19, 29) is arranged in each case above the continuous hole (16, 26).

4. Contact wire clamp according to Claim 1, which comprises the following feature:
- a cable lug (8) of an electric cable can be clamped between one of the two nuts (4, 6) and the clamp part (1, 2).

## Revendications

1. Pince de fil de contact, comportant deux parties (1, 2) de serrage de forme identique, qui comprennent chacune une première région (11, 21) terminale, une deuxième région (12, 22) terminale, une région (13, 23) médiane située entre les deux régions terminales, et une barrette (14, 24) de serrage, les premières régions (11, 21) terminales comportant respectivement un perçage (15, 25) taraudé traversant, s'étendant horizontalement et perpendiculairement à la barrette (14, 24) de serrage, et les deuxièmes régions (12, 22) terminales comportant respectivement un perçage (16, 26) traversant, s'étendant horizontalement et perpendiculairement à la barrette (14, 24) de serrage, une vis (3, 5) respective étant, pour l'assemblage des deux parties (1, 2) de serrage, passée dans le perçage (15, 25) taraudé traversant de l'une (1, 2) des parties de serrage et dans le perçage (16, 26) traversant correspondant de l'autre partie (2, 1) de serrage, et assujettie axialement par un écrou (4, 6), et les deux parties (1, 2) de serrage, lorsque la pince de fil de contact est montée, serrant au moyen des deux vis (3, 5) et de leurs écrous (4, 6) un fil de contact rainuré de telle sorte que les barrettes (14, 24) de serrage sont en prise avec les rainures du fil de contact rainuré, **caractérisée en ce que** la région (13, 23) médiane de chacune des deux parties (1, 2) de serrage comporte une demi-coque (17, 27) taraudée qui s'étend perpendiculairement aux perçages (15, 25) taraudés traversants et aux perçages (16, 26) traversants, ainsi que perpendiculairement à la barrette (14, 24) de serrage, et **en ce que** les demi-coques (17, 27) taraudées forment, lorsque la pince de fil de contact est montée, un logement (7) taraudé.

2. Pince de fil de contact suivant la revendication 1, qui comprend la caractéristique suivante :
- les parties (1, 2) de serrage présentent toutes deux, dans leur première région (11, 21) terminale, une cuvette (18, 28) sphérique disposée symétriquement par rapport à la demi-coque (17, 27) taraudée et, dans leur deuxième région (12, 22) terminale, une demi-sphère (19, 29) disposée symétriquement par rapport à la demi-coque (17, 27) taraudée, qui se correspondent mutuellement lorsque les parties (1, 2) de serrage sont assemblées.

3. Pince de fil de contact suivant la revendication 2, qui comprend la caractéristique suivante :
- la cuvette (18, 28) sphérique est respectivement disposée au-dessus du perçage (15, 25) taraudé traversant, et la demi-sphère (19, 29) est respectivement disposée au-dessus du perçage (16, 26) traversant.

4. Pince de fil de contact suivant la revendication 1, qui comprend la caractéristique suivante :
- une cosse (8) terminale d'un câble électrique peut être serrée entre un des deux écrous (4, 6) et la partie (1, 2) de serrage.
